# EUROPÄISCHE PATENTSCHRIFT

(11) **EP 1 886 890 B1**
(45) Veröffentlichungstag und Bekanntmachung des Hinweises auf die Patenterteilung: **22.06.2011**
(21) Anmeldenummer: 07113020.7
(22) Anmeldetag: 24.07.2007
(51) Int. Cl.: B60W 10/06, B60W 10/02, F16D 48/06

(54) **Verfahren zur fahrwiderstandsabhängigen Einstellung des Kupplungsmomentes eines Kraftfahrzeuges**
Method for adjusting the clutch torque of a motor vehicle in relation to the driving resistance
Procédé destiné au réglage dépendant de la résistance à l'avancement du moment de embrayage d'un véhicule automobile

(30) Priorität: 11.08.2006 DE 102006037704
(43) Veröffentlichungstag der Anmeldung: 13.02.2008
(73) Patentinhaber: ZF Friedrichshafen AG, 88038 Friedrichshafen (DE)
(72) Erfinder: Bitzer, Franz, 88048, Friedrichshafen (DE); Herter, Peter, 88212, Ravensburg (DE); Petzold, Rainer, 88045, Friedrichshafen (DE); Steinborn, Mario, 88046, Friedrichshafen (DE)

(56) Entgegenhaltungen:
- WO-A1-2004/005744
- DE-A1- 3 831 449
- DE-A1- 10 025 882
- FR-A1- 2 824 883

## Beschreibung

Die Erfindung betrifft ein Verfahren zur fahrwiderstandsabhängigen Einstellung eines Kupplungsmomentesgemäß dem Oberbegriff des Patentanspruchs 1.

Automatisierte Kupplungen werden seit geraumer Zeit in Antriebssträngen unterschiedlicher Kraftfahrzeugtypen genutzt, Insbesondere eine zwischen einer Antriebsmaschine und einem Getriebe befindliche, zumeist als trockene Reibkupplung ausgebildete Haupt- bzw. Anfahrkupplung dient dabei dazu, ein von der Antriebsmaschine bereitgestelltes Drehmoment schaltbar auf die Eingangswelle des Getriebes zu übertragen und insbesondere bei Schaltgetrieben mit diskreten Übersetzungsverhältnissen das Anfahren zu ermöglichen. Derartige Kupplungen werden im Folgenden als Anfahrkupplungen bezeichnet.

Da insbesondere Verbrennungsmotoren erst oberhalb einer bestimmten Motordrehzahl ein für das Anfahren ausreichendes Drehmoment abgeben können, ist auch im kleinsten Gang des Getriebes bei Stillstand des Fahrzeugs ein Anfahren mit schleifender Kupplung notwendig. Bei vollständig manuell zu schaltenden Getrieben kann der Fahrer aufgrund seiner Erfahrung durch gleichzeitige Betätigung sowohl des Fahrpedals als auch des Kupplungspedals die Motordrehzahl und das Motordrehmoment einerseits sowie den Kupplungsschlupf und das von der Kupplung übertragene Moment andererseits so dosieren, dass zunächst bei schleifender Kupplung eine Fahrgeschwindigkeit des Fahrzeugs erreicht wird, die ein vollständiges Schließen der Anfahrkupplung bei dem gewählten Übersetzungsverhältnis des Getriebes gestattet. Dabei muss der Fahrer insbesondere in Abhängigkeit vom Fahrwiderstand (Anfahrwiderstand) die Stellung beider Pedale jeweils dynamisch auf einander abstimmen. Bei hoher Zuladung und Anfahrvorgängen an großen Steigungen muss er beispielsweise das Fahrpedal recht weit niederdrücken, um ein zum Anfahren an der Steigung ausreichendes Motordrehmoment zu erzeugen. Dieses Motordrehmoment steht bei einer vergleichsweise hohen Motordrehzahl zur Verfügung. Entsprechend langsam ist die Kupplung zu schließen, damit nicht durch ein vorzeitiges zu weitgehendes Einkuppeln ein zu großes Drehmoment vom Motor abgenommen wird, welches aufgrund der trägen Masse des Fahrzeugs und der noch sehr niedrigen Fahrgeschwindigkeit desselben zu einem raschen Abfallen der Motordrehzahl und einem so genannten Abwürgen des Motors führen würde.

Nicht zuletzt um den Fahrer von diesen komplizierten Steuerungsaufgaben zu entlasten wurden halbautomatische, automatische und automatisierte Getriebe mit entsprechend automatisch oder automatisiert betätigbaren Anfahrkupplungen entwickelt. Diese sind zumeist so ausgelegt, dass ein Anfahrvorgang mit einer relativ geringen Kupplungsbelastung möglich wird, weshalb ein insgesamt geringer Kupplungsschlupf während des Anfahrvorgangs und ein relativ frühes vollständiges Einkuppeln der automatisierten Kupplung angestrebt werden.

Es sind nun zwei unterschiedliche Betriebsmodi des Kraftfahrzeugs zu berücksichtigen:
Beim Anfahrmodus ist es wie oben schon ausgeführt erwünscht, die Kupplung lediglich so lange wie notwendig schleifen zu lassen und zumeist möglichst zügig einen Fahrzustand bei vollständig geschlossener Kupplung zu erreichen.
Beim Rangiermodus soll das Fahrzeug mit einer sehr geringen Geschwindigkeit bewegt werden. Dafür ist es aufgrund der Drehzahl-Drehmornent-Kennlinie des Antriebsmotors und der vorgegebenen kleinsten Getriebeübersetzung zumeist notwendig, die Kupplung dauerhaft schleifen zu lassen. Die Anfahrkupplung wird in diesem Fall deutlich langsamer und jedenfalls erst bei erheblich größeren Fahrpedalauslenkungen als im Anfahrmodus vollständig geschlossen.

Es ist jedoch bei automatisierten Kupplungen schwierig, nur aufgrund der Fahrpedalstellung bzw. der Bewegungsdaten des Fahrpedals den tatsächlichen Wunsch des Fahrers zu ermitteln und die Kupplung entsprechend einzustellen. So ist ohne weitere Vorkehrungen der Bereich des Rangiermodus üblicher Weise auf kleine Gänge und relativ geringe Fahrpedalauslenkungen beschränkt, welches ein behutsames und genaues Rangieren vor allem dann ausgesprochen schwierig macht, wenn bereits zum Halten des Fahrzeugs an einem Hang eine gewisse Pedalauslenkung des Fahrpedals erforderlich ist.

Zur Vergrößerung des für das Rangieren nutzbaren Auslenkungsbereiches des Fahrpedals ist es bekannt, insbesondere im niedrigsten Vorwärtsgang und dem Rückwärtsgang oder dem am niedrigsten übersetzten Rückwärtsgang einen bestimmten, vergrößerten Pedalweg des Fahrpedals für einen Rangiermodus vorzusehen. Bei einer Auslenkung des Fahrpedals bis z.B. 75% der Maximalauslenkung wird in diesen Gängen die Anpresskraft der Anfahrkupplung im Vergleich zum Anfahrmodus erheblich reduziert. Erreicht der Fahrer jedoch eine Fahrpedalauslenkung von in diesem Fall 75%, so wird automatisch der Anfahrmodus aktiviert. Dies kann gerade im oft besonders sicherheitskritischen Rangierbetrieb bei Überschreitung der 75%-Schwelle zu einem für den Fahrer unvorhergesehenen Verhalten des Fahrzeugs führen. Dies gilt in besonderem Maße, wenn durch einen ungewöhnlich hohen Fahrwiderstand, z.B. bedingt durch eine hohe Zuladung und eine starke Steigung, bis zum Erreichen dieses Grenzwertes für die Fahrpedalauslenkung noch keine oder nur eine sehr geringe Fahrzeuggeschwindigkeit erreicht wurde. Sofern der Fahrer in diesem Fall das Fahrpedal weit auslenkt, um etwa ein Zurückrollen möglichst schnell zu beenden, besteht die akute Gefahr, dass er damit die Grenze zum Wechsel in den Anfahrmodus überschreitet und das Fahrzeug unerwartet vergleichsweise schnell nach vorne rollt.

Ein bekannter Lösungsansatz besteht darin, den Betriebsmodus des Kraftfahrzeugs mit Hilfe einer durch den Fahrer zu tätigenden Eingabe explizit vorzugeben. Hierfür können beispielsweise besondere Schaltelemente im Fahrzeug vorgesehen werden. Eine besonders vorteilhafte Lösung ist dazu aus der nicht vorveröffentlichten DE 10 2005 021 414 der Anmelderin bekannt, bei welcher ein Tastelement dem Fahrer ermöglicht, einen Rangiermodus anzufordem. Andere bekannte Lösungen sehen z.B. Schalter mit zwei Schaltstellungen für diesen Zweck vor. Allerdings besteht gerade beim Rangieren an Steigungen die Gefahr, dass das Fahrzeug gerade aufgrund der absichtlich reduzierten Anpresskraft der Anfahrkupplung unbeabsichtigt die Steigung hinabrollt oder zumindest anders reagiert, als der Fahrer dies von normalen Rangiervorgängen in der Ebene gewohnt ist.

Um aufgrund des oft erhöhten Gefährdungspotentials im Rangierbetrieb eine möglichst schnelle Betätigung einer Bremse zu ermöglichen, ist in der EP 1 268 231 B1 der Anmelderin ein Verfahren offenbart, bei welchem nach Betätigung eines Bedienelementes ein automatisch gesteuertes Kriechen des Fahrzeugs ohne Betätigung des Fahrpedals veranlasst wird. Die Kriechgeschwindigkeit kann dabei z.B. in Abhängigkeit von der Betätigungszeit oder der Betätigungsanzahl des Bedienelementes festgelegt werden.

Diese Lösungen bedeuten einen erheblichen Beitrag zur Vereinfachung der Bedienung des Fahrzeugs und zur Steigerung der Sicherheit. Es ist allerdings notwendig, dass der Fahrer an die Betätigung des Schaltelementes zur Einstellung des Kriechganges denkt. Weiter entspricht die Festlegung auf eine vorgewählte Geschwindigkeit nicht immer optimal den Anforderungen der Praxis, in der z.B. erst mit zunehmender Annäherung an eine Laderampe oder ähnliches die Geschwindigkeit zunehmend verringert wird. Auch dann, wenn die Geschwindigkeit des Fahrzeugs mit Hilfe des Betätigungselementes einstellbar ist, entspricht dies nicht der intuitiven und vom Fahrer gewohnten Einstellung der Geschwindigkeit mit dem Fahrpedal.

Ein weiterer bekanntes Verfahren zur Einstellung eines Kupplungsmomentes einer automatisierten Anfahrkupplung eines Kraftfahrzeuges ist aus dem nächstliegenden Stand der Technik, Dokument DE 100 25 882, bekannt.

Insgesamt wäre es wünschenswert, wenn sich das Verhalten des Fahrzeugs als Reaktion auf eine Pedalauslenkung durch den Fahrer stärker von den zurzeit auf das Fahrzeug einwirkenden Fahrwiderstands-Einflussfaktoren, insbesondere der Steigung unter dem Fahrzeug und der Zuladung, entkoppeln ließe. Dadurch würde bei unterschiedlichen Betriebsbedingungen ein weitgehend gleiches Fahrzeugverhalten erzielt und so gerade für weniger geübte Fahrer ein erheblicher Zuwachs an Komfort und Sicherheit insbesondere bei Rangiervorgängen erreicht.

Vor diesem Hintergrund liegt der Erfindung die Aufgabe zugrunde, ein Verfahren für die Steuerung oder Regelung eines Kupplungsmomentes einer Anfahrkupplung eines Kraftfahrzeuges vorzustellen, welches erstens ein unbeabsichtigtes Rollen des Kraftfahrzeugs auf einer Steigung zuverlässig verhindert, und zweitens einen komfortablen Rangiermodus ermöglicht, der ohne eine gesonderte Betätigung eines Bedienelementes zur Aktivierung des Rangiermodus auskommen kann und auch beim Rangieren an Steigungen eine genau dosierte Geschwindigkeitsvorgabe über einen großen Bereich des maximalen Auslenkweges des Fahrpedals ermöglicht, wobei die sich einstellende Fahrzeuggeschwindigkeit weitgehend unabhängig von der Steigung und Zuladung sein soll.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass der aktuelle Fahrwiderstand die entscheidende Einflussgröße für die Ermittlung einer optimalen Anpresskraft auf die Reibelemente einer Anfahrkupplung sowie für die Bestimmung des optimalen Abtriebsdrehmomentes einer Antriebsmaschine und einer zugehörigen Motordrehzahl ist, um die Geschwindigkeit und Beschleunigung eines Kraftfahrzeuges bei einem Rangier- bzw. Anfahrvorgang bestmöglich vorgeben zu können. Wesentliche Einflussgrößen für die Größe des Fahrwiderstandes sind dabei die aktuelle Steigung der Fahrbahn und das Gewicht des Fahrzeugs.

Demnach geht die Erfindung von einem Verfahren zur Einstellung eines Kupplungsmomentes einer automatisierten Anfahrkupplung eines Kraftfahrzeuges aus. Hierfür ist eine Motorsteuereinrichtung vorgesehen, welche unter Einbeziehung zumindest einer momentanen Auslenkung eines Fahrpedals eine Antriebsmaschine zur Abgabe eines Motordrehmomentes ansteuert. Weiter ist eine Kupplungssteuereinrichtung vorgesehen, welche unter Einbeziehung zumindest der momentanen Auslenkung des Fahrpedals ein Kupplungsmoment einer automatisierten Anfahrkupplung beeinflusst. Schließlich ist ein Getriebe mit variabler Übersetzung vorgesehen, welches ein an einer dem Getriebe zugewandten Seite der automatisierten Anfahrkupplung anliegendes Kupplungsmoment in ein für den Antrieb des Kraftfahrzeugs nutzbares Antriebsdrehmoment umwandeln kann.

Dabei wird unter dem Kupplungsmoment das an der Kupplungsabtriebsseite anliegende Drehmoment verstanden, welches nach Umwandlung durch das Getriebe zum Vortrieb des Kraftfahrzeugs zur Verfügung steht. Selbstverständlich kann als Zielgröße auch jede andere Größe dienen, die zum Kupplungsmoment in einem hinreichend genau bekannten Verhältnis steht. So entspricht das Kupplungsmoment etwa dem an der Getriebeeingangswelle eingebrachten Drehmoment. Unter Berücksichtigung der Getriebeübersetzung und gegebenenfalls der Getriebeverluste kann alternativ auch ein Drehmoment an den angetriebenen Rädern des Kraftfahrzeugs als Zielgröße dienen, Schließlich kann das Kupplungsmoment natürlich bei bekannten Kennfeldern oder sonstigen Kenndaten der Antriebsmaschine, bei bekannten Daten über die Ansteuerung der Antriebsmaschine und beispielsweise dem bekannten Zusammenhang zwischen dem Stellweg eines Kupplungsaktuators sowie der sich an der Kupplung einstellenden Reibkraft der Kupplungsbeläge auch durch diese Größen ausgedrückt werden, weshalb beispielsweise die Position des Kupplungsaktuators ebenfalls als Zielgröße an Stelle des Kupplungsmomentes verwendet werden kann. Entscheidend ist lediglich, dass eine mit dem Kupplungsmoment auf hinreichend genau bekannte Weise verknüpfte Größe so eingestellt wird, dass sich der gewünschte Effekt einstellt.

Die Motorsteuereinrichtung und die Kupplungssteuereinrichtung können jeweils als eigene Steuergeräte ausgebildet sein, die gegebenenfalls auch noch weitere Steuergeräte oder Steuerungsfunktionen für andere Geräte oder Aggregate im Fahrzeug beinhalten können. Sie können aber auch in z.B. einem Steuergerät integriert oder funktionsmäßig auf mehrere andere Steuergeräte verteilt sein. Ebenso ist die Arbeitsweise des Steuergerätes, etwa elektrisch digital, elektrisch analog, fluidgesteuert oder mechanisch im Zusammenhang mit der Erfindung völlig unerheblich.

Der Begriff der automatisierten Anfahrkupplung soll sowohl automatische als auch automatisierte Anfahrkupplungen grundsätzlich jeder Bauart umfassen, solange diese schaltbar und in der Lage sind, mit einer Differenzdrehzahl zwischen der Antriebsseite und der Abtriebsseite der Anfahrkupplung bei gleichzeitiger Übertragung eines Drehmomentes zu arbeiten.

Der Begriff Fahrpedal ist hier von der Funktion her als Bedienelement zu verstehen, welches ein Fahrer betätigen und damit die Geschwindigkeit bzw. Beschleunigung des Fahrzeugs einstellen kann. Ein Handgasschalter, wie er bei bestimmten Baustellenfahrzeugen und Schienenfahrzeugen üblich ist, soll in diesem Sinne ebenfalls als Fahrpedal gelten.

Zur Lösung der gestellten Aufgabe ist eine Anfahr-und-Rangier-Steuereinrichtung vorgesehen, welche Fahrwiderstandsdaten einliest, daraus einen Fahrwiderstand bestimmt und in Abhängigkeit davon einen Grundwert des Kupplungsmoments der automatisierten Anfahrkupplung ermittelt, welcher in Abhängigkeit vom Fahrpedal eingestellt wird.

Dabei gilt in Bezug auf mögliche Ausprägungen der Anfahr-und-Rangier-Steuereinrichtung sinngemäß das oben in Hinblick auf die Motorsteuereinrichtung und die Kupplungssteuereinrichtung erwähnte. Unter Fahrwiderstandsdaten werden Daten verstanden, welche alleine oder in Kombination eine Abschätzung des Fahrwiderstandes erlauben, wobei hier in erster Linie der statische Fahrwiderstand gemeint ist, der bei einem Stillstand des Fahrzeugs beispielsweise aufgrund der Steigung der Straße unter dem Kraftfahrzeug auf dieses wirkt. Neben dem Anfahrwiderstand kann jedoch z.B. auch ein dynamischer Anteil des Fahrwiderstandes berücksichtigt werden, der in erster Linie von der Fahrgeschwindigkeit des Kraftfahrzeugs abhängt.

Die Fahrwiderstandsdaten können direkt oder indirekt durch Sensoren ermittelt werden oder mit Hilfe anderer bekannter Daten abgeschätzt oder ausgelesen werden. So kann beispielsweise bei bekannter Ladungsverteilung des Fahrzeugs aus der auf die verschiedenen Achsen wirkenden Gewichtskraft die Steigung der Straße ermittelt werden. Bei z.B. mittels GPS-Daten bekannter Position und Ausrichtung des Fahrzeugs kann die aktuelle Steigung unter Umständen aus einer abgespeicherten digitalen Karte ausgelesen werden. Weiter kann z.B. über eine Funkbarke eine Steigungsinformation einer Rampe übermittelt werden. Weitere vielfältige Fahrwiderstandsdaten und Möglichkeiten ihrer Erfassung oder Abschätzung sind bekannt. Im Rahmen dieser Beschreibung wird nur auf einige zentrale Fahrwiderstandsdaten genauer eingegangen. Die Verwendung anderer oder weiterer Fahrwiderstandsdaten ist jedoch grundsätzlich durch die beschriebene Erfindung mit erfasst.

Der oben genannte Grundwert des Kupplungsmoments der automatisierten Anfahrkupplung, weicher auch bei fehlender Auslenkung des Fahrpedals eingestellt wird, kann beispielsweise ein Korrekturwert im Sinne einer Offset-Korrektur eines Anfahrkupplungs-Aktuators sein. In diesem Falle wird das Kupplungsmoment bei fehlender Auslenkung des Fahrpedals auf z.B. einen Wert eingestellt, der bei dem gewählten Gang ein Antriebsdrehmoment auf die Räder des Kraftfahrzeugs zur Folge hat, welches gerade ausreicht, um ein Rollen entlang einer schiefen Ebene zu verhindern. Dabei spielt es für die Wirksamkeit der Erfindung grundsätzlich keine Rolle, auf welche Weise dieser Korrekturwert ermittelt wird.

Der Korrekturwert kann beispielsweise mittels Berechnungen unter Verwendung von EDV-Programmen, durch Auslesen aus Kennfeldern, durch selbstlernende Verfahren wie Fuzzy-Logic oder andere Verfahren ermittelt werden. Ebenso unerheblich ist die Art und Weise, wie der Grundwert des Kupplungsmomentes an die Kupplung übermittelt wird. In der Praxis wird es oft vorteilhaft sein, aufgrund bekannter Kennwerte der verwendeten Kupplung den Kupplungsgrundwert in Form einer einzustellenden Position eines Aktuators einzustellen. Es sind hier aber auch Regelkreise denkbar, die das tatsächliche Kupplungsmoment erfassen und z.B. eine Aktuatorposition entsprechend regeln.

Wenn die Anfahr-und-Rangier-Steuereinrichtung gemäß einer ersten Weiterbildung der Erfindung Fahrwiderstandsdaten einliest, daraus einen Fahrwiderstand ermittelt und zusätzlich in Abhängigkeit davon direkt oder über die Motorsteuereinrichtung Signale an die Antriebsmaschine des Kraftfahrzeugs ausgibt, die ein auf den Fahrwiderstand abgestimmtes Drehmoment und/oder eine abgestimmte Drehzahl der Antriebsmaschine bewirken, kann auch bei relativ großen Fahrwiderständen stets ein ausreichendes Motordrehmoment bereitgestellt werden, ohne die Antriebsmaschine dafür mit unnötig hohen Leistungswerten betreiben zu müssen. Eine einfache Alternative wäre die Heraufsetzung der Leerlaufdrehzahl im Rangierbetrieb, also z.B. sobald bestimmte Übersetzungsstufen des Getriebes eingelegt werden und die Fahrgeschwindigkeit des Fahrzeugs unter einem Grenzwert liegt. Dies hätte jedoch einen unnötig hohen Energieverbrauch und eine erhöhte Lärm- und Schadstoffemission zur Folge.

In jedem Fall ist es vorteilhaft, wenn die Anfahr-und-Rangier-Steuereinrichtung als Fahrwiderstandsdaten zumindest Daten über die Steigung der Aufstandsfläche des Kraftfahrzeugs einliest und bei der Ermittlung des Fahrwiderstandes berücksichtigt, da diese Daten in besonders starkem Maße in die Ermittlung des Grundwertes des Kupplungsmoments eingehen sollen, um beispielsweise das unbeabsichtigte Rollen an einem starken Gefälle zu verhindern. Einige Möglichkeiten der Gewinnung dieser Daten wurden bereits erwähnt.

Weiter kann beispielsweise bei einem kontrollierten Lösen der Bremsen ermittelt werden, ab welchem Bremsdruck sich das Kraftfahrzeug gerade zu bewegen beginnt. Daneben existiert eine Vielzahl anderer Verfahren, die Rückschlüsse auf die Steigung der Aufstandsfläche des Kraftfahrzeugs ermöglichen. Dabei kann für unterschiedliche Einsatzbedingungen die Steigung der Aufstandsfläche durchaus unterschiedlich definiert werden. So kann zum einen die Steigung an den Aufstandsflächen der Räder ermittelt und gegebenenfalls unter Berücksichtigung der Aufstandskräfte gemittelt werden. Um den Einfluss kleiner Unebenheiten auf der Fahrbahn, wie etwa eine Metallschwelle eines Rolltores, zu minimieren, ist es jedoch auch möglich, diese Werte z.B. zeitlich zu mitteln oder als Steigung eine mittlere, gegebenenfalls gewichtete Steigung über die Länge des Kraftfahrzeugs oder den Radstand zu ermitteln.

Gerade bei Fahrzeugen für den Güterverkehr oder auch bei Omnibussen ist es besonders sinnvoll, wenn die Anfahr-und-Rangier-Steuereinrichtung als Fahrwiderstandsdaten zumindest Daten über das Gewicht des Kraftfahrzeugs einliest und zur Ermittlung des Fahrwiderstandes verwendet. Während bei Personenkraftwagen hier die Angabe eines mittleren Gesamtgewichtes im Einzelfall ausreichend sein kann, zumindest aber eine Berücksichtigung des Leergewichtes und eine zusätzliche Berücksichtigung von Gewichtszuschlägen z.B. auf der Grundlage von Signalen der Tankanzeige und von Sitzplatzbelegungssensoren in den meisten Fällen ausreichend sein dürfte, ändert sich das Gesamtgewicht von Fahrzeugen des Güterverkehrs und von Omnibussen im Betrieb sehr stark.

Wie sich aus dem vorstehend beschriebenen Beispiel der Ermittlung der Steigung mit Hilfe des minimal zum Halten des Kraftfahrzeugs notwendigen Bremsdrucks ergibt, ist es durchaus möglich, die Steigung und das Gewicht des Fahrzeugs in Form einer Gesamtgröße zu ermitteln. Es sind jedoch auch andere Möglichkeiten der Gewichtsermittlung nutzbar und sinnvoll, insbesondere wenn hierfür kein oder nur ein geringer zusätzlicher Aufwand erforderlich ist. Einige Möglichkeiten sind die Auswertung von Druckdaten einer Luftfederung, die Auswertung von gewichtsbedingten Einfederungen von Teilen des Fahrwerks, die Eingabe durch z.B. einen Fahrer mittels eines Einstellelementes oder eine automatische Ermittlung anhand von Frachtdokumenten.

Grundsätzlich ist es in den meisten Fällen ausreichend, den Grundwert des Kupplungsmomentes nur bei Nutzung des niedrigsten Vorwärtsgangs sowie des niedrigsten Rückwärtsgangs zu ermitteln. Auf diese Weise kann die Übersetzung des Getriebes mit Hilfe fester Faktoren berücksichtigt werden, wobei zur Steigerung der Genauigkeit selbstverständlich weitere Einflussgrößen, wie etwa unterschiedliche Getriebeverluste aufgrund wechselnder Getriebeöltemperaturen, unterschiedliche Raddurchmesser der angetriebenen Räder und weiteres mehr berücksichtigt werden können.

Wenn die Anfahr-und-Rangier-Steuereinrichtung als Fahrwiderstandsdaten jedoch zumindest Daten über eine Antriebsstrangübersetzung des Kraftfahrzeugs einliest und zur Ermittlung des Fahrwiderstandes verwendet, kann der Grundwert des Kupplungsmomentes auf einfache Weise auch für Gänge unterschiedlicher Übersetzungen in der selben Fahrtrichtung ermittelt und eingestellt werden, wodurch sich der mögliche Geschwindigkeitsbereich des Rangierbetriebes deutlich erhöht. Dies ist insbesondere in Verbindung mit einer gesonderten Anforderung des Rangierbetriebes durch den Fahrer sinnvoll. Darüber hinaus wird so die Voraussetzung dafür geschaffen, das Verfahren auch im Anfahr-Betriebsmodus zu nutzen und so die Reaktion des Fahrzeugs auf die Auslenkung des Fahrpedals weitgehend unabhängig von Steigung und Zuladung zu machen.

Es wurde schon angesprochen, dass die Steigung und das Gewicht des Fahrzeugs entscheidende Einflussgrößen für die Ermittlung des Fahrwiderstandes und die Bestimmung des Grundwertes des Kupplungsmomentes sind. In einer Weiterbildung können neben diesen Größen noch weitere Größen berücksichtigt werden. Insbesondere kann die Anfahr-und-Rangier-Steuereinrichtung als Fahrwiderstandsdaten zumindest Daten über den Rollwiderstand des Kraftfahrzeugs einlesen und zur Ermittlung des Fahrwiderstandes verwenden. Der Rollwiderstand kann sich dabei aus einem statischen Teil, der einem Anrollen des Kraftfahrzeugs aus dem Stillstand entgegenwirkt, und einem dynamischen, von der Fahrgeschwindigkeit des Kraftfahrzeugs abhängigen Teil zusammensetzen, und unter anderem die Rollwiderstände der Reifen, Verluste im Antriebsstrang und eventuelle Luftwiderstände aufgrund von Windgeschwindigkeiten und/oder der Fahrgeschwindigkeit des Kraftfahrzeugs beinhalten.

Eine erste Grundvariante des erfindungsgemäßen Verfahrens sieht vor, dass die Anfahr-und-Rangier-Steuereinrichtung mit Hilfe des ermittelten Fahrwiderstandes einen Grundwert des Kupplungsmoments der automatisierten Anfahrkupplung ermittelt, welcher auch bei fehlender Auslenkung des Fahrpedals ein sich einstellendes resultierendes Antriebsdrehmoment an den angetriebenen Rädern des Kraftfahrzeugs zur Folge hat, welches das Fahrzeug im Stillstand hält. Dadurch wird der Fahrer gerade an Steigungen davon entlastet, sich zusätzlich auf ein Verhindern eines ungewollten Rollens des Kraftfahrzeugs konzentrieren zu müssen.

Es ergibt sich durch diesen Grundwert des Kupplungsmomentes eine für den Fahrer stets gleiche oder zumindest ähnliche Reaktion des Fahrzeugs auf eine Auslenkung des Fahrpedals, da nicht erst eine bestimmte, aber von Fall zu Fall wechselnde Auslenkung des Fahrpedals zur Kompensation des Fahrwiderstandes notwendig ist. Damit kann auch eine Software-Schwelle für die Umschaltung von einem Rangiermodus in einen Anfahrmodus problemlos bei einem konstanten Auslenkungsbetrag festgelegt werden, ohne dass die eingangs erläuterten Probleme eines zu geringen Pedalwegs nach dem Wechsel in den Anfahrmodus auftreten würden.

Eine zweite Grundvariante des erfindungsgemäßen Verfahrens sieht dagegen vor, dass die Anfahr-und-Rangier-Steuereinrichtung mit Hilfe des ermittelten Fahrwiderstandes einen Grundwert des Kupplungsmoments der automatisierten Anfahrkupplung ermittelt, welcher auch bei fehlender Auslenkung des Fahrpedals ein sich einstellendes resultierendes Antriebsdrehmoment an den angetriebenen Rädern des Kraftfahrzeugs zur Folge hat, welches das Fahrzeug mit einer vorbestimmten Geschwindigkeit in normale Betriebsrichtung des jeweils aktiven Ganges des Getriebes rollen lässt. Damit kann der Fahrer beispielsweise durch Auswahl des Ganges die Bewegungsrichtung festlegen, den Fuß zur Verringerung der Reaktionszeit stets auf dem Pedal der Bremse belassen und über den zusätzlich durch die Bremsen aufgebrachten Fahrwiderstand eine Feinregelung der Fahrgeschwindigkeit bewirken.

Eine Weiterbildung dieser zweiten Grundvariante sieht vor, dass die vorbestimmte Geschwindigkeit durch den Fahrer und/oder ein automatisches System einstellbar ist. Hier erschient insbesondere eine Kombination mit dem Offenbarungsgehalt der EP 1 268 231 B1 der Anmelderin, insbesondere der Einstellung der Rangiergeschwindigkeit über die Anzahl und oder Dauer der Betätigungen eines Eingabeelementes durch den Fahrer sinnvoll.

Daneben sind jedoch auch automatische Systeme möglich, die beispielsweise die Fahrgeschwindigkeit in Abhängigkeit vom Abstand zu einem Hindernis, wie etwa einer Laderampe automatisch vorgeben. Hier kommen sowohl fahrzeugbasierte Systeme als auch fahrzeugexterne Systeme in Betracht, die etwa fest an einer Laderampe installiert sein können und lediglich Sollwerte an das Fahrzeug übermitteln.

Während das vorgestellte Verfahren grundsätzlich bei allen üblichen Getrieben mit variabler Übersetzung vorteilhaft angewandt werden kann, ist es besonders nutzbringend, wenn das Getriebe ein automatisches oder automatisiertes Getriebe mit separaten Übersetzungen ist. Manuell zu schaltende Getriebe mit lediglich einer automatischen oder automatisierten Kupplung eignen sich zwar grundsätzlich ebenfalls, automatische und automatisierte Getriebe verfügen jedoch oft bereits über entsprechende Steuergeräte und Sensoren, die den Aufwand für die Implementierung des Verfahrens erheblich und im Idealfall auf eine bloße Softwareerweiterung reduzieren können. Während nichts dagegen spricht, das vorgestellte Verfahren mit Getrieben mit stufenloser, variabler Übersetzung zu verbinden, sind die Vorteile jedoch bei Getrieben mit separaten Übersetzungen erheblich größer, da bei diesen keine alternativen Mechanismen zur Verwirklichung eines Rangiermodus durch eine schleifende Kupplung bestehen.

Schließlich wurde bereits beschrieben, dass das Gewicht des Fahrzeugs eine für die Durchführung des Verfahrens entscheidende Einflussgröße darstellt. Zudem ist ein Zentimeter- oder gar millimetergenaues Rangieren bei Personenkraftwagen nur in Ausnahmefällen notwendig, während dies bei Kraftfahrzeugen, die für die Beförderung von Gütern ausgelegt sind, relativ häufig erforderlich ist, um beispielsweise ein Befahren desselben mit einem Paletenhubwagen oder die Befüllung mit einem Tankstutzen zu ermöglichen. Da das zielgenaue Rangieren zusätzlich mit zunehmender Fahrzeuglänge schwieriger wird, bietet das Verfahren gerade dann besondere Vorteile, wenn das Kraftfahrzeug ein Schwerlastkraftwagen ist.

Die Erfindung lässt wird nachfolgend anhand eines Ausführungsbeispiels weiter erläutert

Ein schwerer Lastkraftwagen mit einem Dieselmotor als Antriebsmaschine, einem automatischen Schaltgetriebe und einer trockenen Reibkupplung als Anfahrkupplung zwischen dem Dieselmotor und dem Schaltgetriebe soll im Rangierbetrieb gemäß dem erfindungsgemäßen Verfahren betrieben werden. Der Lastkraftwagen verfügt ohnehin über ein Motorsteuergerät, das auf Grundlage einer Fahrpedalauslenkung durch den Fahrer und weiterer Eingangsgrößen unter anderem die Kraftstoff-Einspritzmenge und das sich bei einer gegebenen Drehzahl einstellende Drehmoment steuert bzw. regelt. Ebenso ist das Schaltgetriebe mit einem Getriebesteuergerät verbunden, welches in Abhängigkeit von der Fahrgeschwindigkeit des Lastkraftwagens, dem übertragenen Drehmoment und der Stellung des Fahrpedals ein jeweils geeignetes Übersetzungsverhältnis wählt und einstellt. Das Getriebe weist beispielsweise zwei Rückwärtsgänge und zehn Vorwärtsgänge auf, wobei der Fahrer mit Hilfe eines Fahrstufenschalters die Anzahl der von der Getriebesteuerung wählbaren Gänge begrenzen oder mittels eines sequentiellen Eingabeelementes einen bestimmten Gang auswählen kann.

In den untersten beiden Vorwärts- und den beiden Rückwärtsgängen ist ein Rangiermodus vorgesehen. Dies bedeutet, dass die Getriebesteuerung, die auch die automatisierte Anfahrkupplung steuert, die Anfahrkupplung bis zu einer Pedalauslenkung von ca. 70% des maximalen Pedalwegs in einem Bereich hält, bei dem ein Kupplungsschlupf auftritt. Auf diese Weise lässt sich der Lastkraftwagen in einem Geschwindigkeitsbereich bewegen, bei dem der Dieselmotor im gewählten Gang die benötigte Leistung nicht bei der durch die gewählte Übersetzung bei vollständig geschlossener Anfahrkupplung bedingten Drehzahl abgeben kann. Außerdem ist nur so eine Fahrgeschwindigkeit möglich, die bei vollständig geschlossener Kupplung eine Motordrehzahl unterhalb der Leerlaufgeschwindigkeit zur Folge hätte. Weiter ist das Fahrzeug mit einem Taster ausgestattet, mit dem der Fahrer in den genannten vier Gängen den Rangiermodus bei Bedarf deaktivieren und in höheren Gängen aktivieren kann.

Für den Fall, das der Lastkraftwagen ohne die Implementierung des erfindungsgemäßen Verfahrens mit hoher Zuladung an einer starken Steigung rangiert werden soll, würde der Fahrer einen geeigneten (hier den kleinsten) Vorwärts- oder Rückwärtsgang wählen. Nun müsste er, während er den Lastkraftwagen zunächst z.B. mit der Betriebsbremse gegen ein Hinunterrollen der Steigung sichert, das Fahrpedal so weit durchtreten, dass die auf die Räder wirkenden Vortriebskräfte zumindest die durch die Steigung und das Gewicht des Lastkraftwagens bedingte Kraft in Richtung der Rampenunterkante aufheben oder diese überschreiten. Dann kann er die Bremse lösen und das Fahrzeug durch vorsichtiges weiteres Betätigen des Fahrpedals langsam bescheunigen. In der Ebene sind hierzu auch bei höchster zulässiger Zuladung nicht mehr als 20 % bis 40 % der maximalen Fahrpedalauslenkung notwendig, welches in einem großen Fahrpedalbereich von 20 % bzw. 40 % bis ca 70 % einen Rangierbetrieb ermöglicht.

An einer starken Steigung bei hoher Zuladung muss der Fahrer ohne die Anwendung des erfindungsgemäßen Verfahrens das Gaspedal jedoch bis auf ca. 65 % der maximalen Auslenkung betätigen, um die an der Steigung wirkenden Hangabtriebskräfte auszugleichen. Sobald er nun im Rangierbetrieb auch nur um ein Geringes schneller fahren möchte, überscheitet er die 70%-Grenze der Fahrpedalauslenkung, bei der die Getriebesteuerung den Rangiermodus verlässt und in den Anfahrmodus wechselt, bei dem zur Verringerung des Verschleißes die Anfahrkupplung schnellstmöglich vollständig geschlossen wird. Dies hat zur Folge, dass die Motorsteuerung aufgrund des schnell steigenden, abgeforderten Drehmomentes die Kraftstoff-Einspritzmenge und das Motordrehmoment erhöht, während die Anfahrkupplung zunehmend weniger Schlupf aufweist. Das Fahrzeug beschleunigt für den Fahrer unvorhersehbar schnell und zudem ruckartig.

Bei Anwendung des erfindungsgemäßen Verfahrens wird der Fahrwiderstand, welcher an der besagten Steigung dem Lastkraftwagen in Richtung auf das obere Ende der Rampe entgegenwirkt, erfasst, und die Grundposition der Anfahrkupplung automatisch, z.B. durch Verstellung des Offsets bzw. eine Anfahrkupplung automatisch, z.B. durch Verstellung des Offsets bzw. eine Nullpunktverschiebung eines Kupplungsaktuators, so verstellt, dass ein vom Dieselmotor bereitgestelltes Antriebsdrehmoment über die schleifende Anfahrkupplung und die gewählte Getriebeübersetzung gerade ausreicht, um den Lastkraftwagen ohne einen zusätzlichen Einsatz einer Bremse an der Steigung zu halten.

Dazu kann der Fahrer im einfachsten Fall das Gewicht oder die tatsächliche Zuladung des Fahrzeugs mit Hilfe einer gestuften oder stufenlosen Eingabevorrichtung angeben. Hierdurch ergibt sich für den Fahrer zudem auf besonders einfache Weise die Möglichkeit, durch eine willkürliche Verstellung des zu berücksichtigenden Fahrzeuggewichtes, welches dann nicht dem tatsächlichem Fahrzeuggewicht entspricht, dafür zu sorgen, das sich das Fahrzeug bei nicht ausgelenktem Fahrpedal an einer Steigung langsam in Richtung auf die obere oder untere Seite der Rampe bzw. Steigung zu bewegt.

Die Steigung kann beispielsweise über eine Veränderung der Achsbelastung gegenüber einer Achsbelastung auf ebener Strecke erfasst werden. Es ist jedoch auch möglich, beliebige andere Verfahren zu verwenden oder die Steigung z.B. an Laderampen durch eine Funkbarke automatisch an den Lastkraftwagen zu übermitteln. Besonders elegant ist es, wenn der Fahrwiderstand dadurch ermittelt wird, dass der Arbeitsdruck der Betriebsbremse bei vollständig getrennter Anfahrkupplung oder einer eingestellten Neutralstellung des Getriebes automatisch und gezielt so lange verringert wird, bis sich das Fahrzeug gerade in Bewegung zu setzen beginnt. Auf diese Weise lässt sich aus dem bekannten Bremsdruck direkt der statische Fahrwiderstand ermitteln oder zumindest ausreichend genau abschätzen.

Durch die entsprechende Einstellung des Grundwerts der Anfahrkupplung wird der Lastkraftwagen während des Rangierens auch ohne Betätigung einer Bremse durch den Fahrer an der Steigung im Stillstand gehalten. Betätigt der Fahrer nun das Fahrpedal, so ergibt sich auch bei kleinen Auslenkungen bereits eine resultierende Vortriebskraft für das Fahrzeug, womit dem Fahrer zum Rangieren die vollen 70% des maximalen Pedalweges zur Verfügung stehen, welches ein feinfühliges Rangieren gestattet. Weiter ergibt sich auch ein unabhängig von der Steigung immer weitgehend gleiches Ansprechen des Fahrzeugs auf die Auslenkung des Fahrpedals.

Da davon auszugehen ist, dass die beispielhaft genannten 70 % des maximalen Pedalweges beim Rangieren üblicherweise nicht voll ausgenutzt werden, wird der Fahrzeugführer nicht überrascht sein, wenn nach einem Überschreiten dieses Auslenkweges das Steuergerät von dem Rangiermodus in den Anfahrmodus umschaltet.

Die Vorteile des Verfahrens können selbstverständlich auch genutzt werden, wenn durch eine manuelle Eingabe des Fahrers der Rangiermodus fest vorgegeben wird, oder sich das Fahrzeug im Anfahrmodus befindet

## Patentansprüche

1. Verfahren zur Einstellung eines Kupplungsmomentes einer automatisierten Anfahrkupplung eines Kraftfahrzeuges, mit einer Motorsteuereinrichtung, welche unter Einbeziehung zumindest einer momentanen Auslenkung eines Fahrpedals eine Antriebsmaschine zur Abgabe eines Motordrehmomentes ansteuert, mit einer Kupplungssteuereinrichtung, welche unter Einbeziehung zumindest der momentanen Auslenkung des Fahrpedals ein Kupplungsmoment einer automatisierten Anfahrkupplung beeinflusst, und mit einem Getriebe mit variabler Übersetzung, welches ein an einer dem Getriebe zugewandten Seite der automatisierten Anfahrkupplung anliegendes Motordrehmoment in ein für den Antrieb des Kraftfahrzeugs nutzbares Getriebeabtriebsdrehmoment umwandeln kann, wobei eine Anfahr-und-Rangier-Steuereinrichtung vorgesehen ist, welche Fahrwiderstandsdaten einliest, daraus einen aktuellen Fahrwiderstand bestimmt und in Abhängigkeit davon einen Grundwert des Kupplungsmoments der automatisierten Anfahrkupplung ermittelt, welcher in Abhängigkeit vom Fahrpedal eingestellt wird, **dadurch gekennzeichnet, dass** die Anfahr-und-Rangier-Steuereinrichtung mit Hilfe des ermittelten Fahrwiderstandes einen Grundwert des Kupplungsmoments der automatisierten Anfahrkupplung ermittelt, welcher auch bei fehlender Auslenkung des Fahrpedals ein sich einstellendes resultierendes Antriebsdrehmoment an den angetriebenen Rädern des Kraftfahrtzeugs zur Folge hat, welches das Fahrzeug im Stillstand hält, oder welches das Fahrzeug mit einer vorbestimmten Geschwindigkeit in normaler Betriebsrichtung des jeweils aktiven Ganges des Getriebes rollen lässt.

2. Verfahren nach Anspruch 1, **dadurch gekennzeichnet, dass** die Anfahr-und-Rangier-Steuereinrichtung Fahrwiderstandsdaten einliest, daraus einen Fahrwiderstand ermittelt, und in Abhängigkeit davon direkt oder über die Motorsteuereinrichtung Signale an die Antriebsmaschine des Kraftfahrzeugs ausgibt, die ein auf den aktuellen Fahrwiderstand abgestimmtes Drehmoment und/oder eine abgestimmte Drehzahl der Antriebsmaschine bewirken.

3. Verfahren nach Anspruch 1 oder 2, **dadurch gekennzeichnet, dass** die Anfahr-und-Rangier-Steuereinrichtung als Fahrwiderstandsdaten zumindest Daten über die Steigung der Aufstandsfläche des Kraftfahrzeugs einliest und bei der Ermittlung des Fahrwiderstandes berücksichtigt.

4. Verfahren nach wenigstens einem der Ansprüche 1 bis 3, **dadurch gekennzeichnet, dass** die Anfahr-und-Rangier-Steuereinrichtung als Fahrwiderstandsdaten zumindest Daten über das Gewicht des Kraftfahrzeugs einliest und zur Ermittlung des Fahrwiderstandes verwendet.

5. Verfahren nach wenigstens einem der Ansprüche 1 bis 4, **dadurch gekennzeichnet, dass** die Anfahr-und-Rangier-Steuereinrichtung als Fahrwiderstandsdaten zumindest Daten über eine Antriebsstrangübersetzung des Kraftfahrzeuges einliest und zur Ermittlung des Fahrwiderstandes verwendet.

6. Verfahren nach wenigstens einem der Ansprüche 1 bis 5, **dadurch gekennzeichnet, dass** die Anfahr-und-Rangier-Steuereinrichtung als Fahrwiderstandsdaten zumindest Daten über den Rollwiderstand des Kraftfahrzeugs einliest und zur Ermittlung des Fahrwiderstandes verwendet.

7. Verfahren nach Anspruch 1, **dadurch gekennzeichnet, dass** die vorbestimmte Geschwindigkeit durch den Fahrer und/oder ein automatisches System einstellbar ist.

8. Verfahren nach wenigstens einem der Ansprüche 1 bis 7, **dadurch gekennzeichnet, dass** als Getriebe ein automatisches oder automatisiertes Getriebe mit separaten Übersetzungen verwendet wird.

9. Verfahren nach wenigstens einem der Ansprüche 1 bis 8, **dadurch gekennzeichnet, dass** als Kraftfahrzeug ein Fahrzeug für die Beförderung von Gütern oder Personen genutzt wird.

10. Verfahren nach wenigstens einem der vorherigen Ansprüche, **dadurch gekennzeichnet, dass** als Kraftfahrzeug ein Schwerlastkraftwagen verwendet wird.

## Claims

1. Method for adjusting a clutch torque of an automated starting clutch of a motor vehicle, having an engine control unit which, taking into consideration at least a present deflection of an accelerator pedal, actuates a drive engine for the output of an engine torque, having a clutch control unit which, taking into consideration at least the present deflection of the accelerator pedal, influences a clutch torque of an automated starting clutch, and having a gearbox which has a variable transmission ratio and which can convert an engine torque acting on that side of the automated starting clutch which faces towards the gearbox into a gearbox drive output torque which can be utilized for the drive of the motor vehicle, wherein a starting and manoeuvring control unit is provided which reads in driving resistance data, from this determines a present driving resistance and, as a function thereof, determines a base value of the clutch torque of the automated starting clutch, which base value is set as a function of the accelerator pedal, **characterized in that** the starting and manoeuvring control unit determines, by means of the determined driving resistance, a base value of the clutch torque of the automated starting clutch, which base value, even when the accelerator pedal is not deflected, results in a resultant drive torque being set at the driven wheels of the motor vehicle which keeps the vehicle at a standstill or allows the vehicle to roll with a predetermined speed in the normal operating direction of the respectively active gear of the gearbox.

2. Method according to Claim 1, **characterized in that** the starting and manoeuvring control unit reads in driving resistance data, from this determines a driving resistance and, as a function thereof, outputs signals to the drive engine of the motor vehicle directly or via the engine control unit, which signals yield a torque coordinated with the present driving resistance and/or a coordinated rotational speed of the drive engine.

3. Method according to Claim 1 or 2, **characterized in that**, as driving resistance data, the starting and manoeuvring control unit reads in, and takes into consideration in determining the driving resistance, at least data regarding the gradient of the contact area of the motor vehicle.

4. Method according to at least one of Claims 1 to 3, **characterized in that**, as driving resistance data, the starting and manoeuvring control unit reads in, and uses for determining the driving resistance, at least data regarding the weight of the motor vehicle.

5. Method according to at least one of Claims 1 to 4, **characterized in that**, as driving resistance data, the starting and manoeuvring control unit reads in, and uses for determining the driving resistance, at least data regarding a drivetrain transmission ratio of the motor vehicle.

6. Method according to at least one of Claims 1 to 5, **characterized in that**, as driving resistance data, the starting and manoeuvring control unit reads in, and uses for determining the driving resistance, at least data regarding the rolling resistance of the motor vehicle.

7. Method according to Claim 1, **characterized in that** the predetermined speed can be set by the driver and/or an automatic system.

8. Method according to at least one of Claims 1 to 7, **characterized in that**, as a gearbox, use is made of an automatic or automated gearbox with separate transmission ratios.

9. Method according to at least one of Claims 1 to 8, **characterized in that**, as a motor vehicle, use is made of a vehicle for the conveyance of goods or persons.

10. Method according to at least one of the preceding claims, **characterized in that**, as a motor vehicle, use is made of a heavy goods vehicle.

## Revendications

1. Procédé de réglage d'un couple d'embrayage d'un embrayage de démarrage automatisé d'un véhicule automobile, comprenant un dispositif de commande de moteur qui, en incluant au moins une déviation instantanée d'une pédale d'accélération, commande une machine d'entraînement de telle sorte qu'elle fournisse un couple moteur, comprenant un dispositif de commande d'embrayage qui, en incluant au moins la déviation instantanée de la pédale d'accélération, influence un couple d'embrayage d'un embrayage de démarrage automatisé, et comprenant une transmission à rapport de transmission variable, qui peut convertir un couple moteur s'appliquant à un côté de l'embrayage de démarrage automatisé tourné vers la transmission en un couple de sortie de transmission pouvant être utilisé pour l'entraînement du véhicule automobile, un dispositif de commande de démarrage et de manoeuvre étant prévu, lequel saisit des données de résistance à l'avancement, détermine à partir de celles-ci une résistance à l'avancement actuelle, et établit en fonction de celle-ci une valeur de base du couple d'embrayage de l'embrayage de démarrage automatisé qui est ajustée en fonction de la pédale d'accélération, **caractérisé en ce que** le dispositif de commande de démarrage et de manoeuvre détermine, à l'aide de la résistance à l'avancement établie, une valeur de base du couple d'embrayage de l'embrayage de démarrage automatisé qui entraîne, même en cas d'absence de déviation de la pédale d'accélération, un couple d'entraînement résultant s'établissant au niveau des roues entraînées du véhicule automobile, lequel maintient le véhicule à l'arrêt ou permet au véhicule de rouler à une vitesse prédéterminée dans une direction de fonctionnement normale de chaque rapport actif de la transmission.

2. Procédé selon la revendication 1, **caractérisé en ce que** le dispositif de commande de démarrage et de manoeuvre saisit des données de résistance à l'avancement, détermine à partir de celles-ci une résistance à l'avancement, et en fonction de celle-ci, envoie directement, ou par le biais du dispositif de commande de moteur, des signaux à la machine d'entraînement du véhicule automobile, lesquels donnent lieu à un couple de la machine d'entraînement adapté à la résistance actuelle à l'avancement et/ou une vitesse de rotation de la machine d'entraînement adaptée à la résistance actuelle à l'avancement.

3. Procédé selon la revendication 1 ou 2, **caractérisé en ce que** le dispositif de commande de démarrage et de manoeuvre saisit, en tant que données de résistance à l'avancement, au moins des données concernant la pente de la surface d'appui du véhicule automobile, et en tient compte lors de la détermination de la résistance à l'avancement.

4. Procédé selon au moins l'une quelconque des revendications 1 à 3, **caractérisé en ce que** le dispositif de commande de démarrage et de manoeuvre saisit, en tant que données de résistance à l'avancement, au moins des données concernant le poids du véhicule automobile et les utilise pour déterminer la résistance à l'avancement.

5. Procédé selon au moins l'une quelconque des revendications 1 à 4, **caractérisé en ce que** le dispositif de commande de démarrage et de manoeuvre saisit, en tant que données de résistance à l'avancement, au moins des données concernant un rapport de multiplication de la chaîne cinématique et les utilise pour déterminer la résistance à l'avancement.

6. Procédé selon au moins l'une quelconque des revendications 1 à 5, **caractérisé en ce que** le dispositif de commande de démarrage et de manoeuvre saisit, en tant que données de résistance à l'avancement, au moins des données concernant la résistance au roulis du véhicule automobile et les utilise pour déterminer la résistance à l'avancement.

7. Procédé selon la revendication 1, **caractérisé en ce que** la vitesse prédéterminée peut être ajustée par le conducteur et/ou un système automatique.

8. Procédé selon au moins l'une quelconque des revendications 1 à 7, **caractérisé en ce que** l'on utilise comme transmission une transmission automatique ou automatisée avec des rapports de transmission séparés.

9. Procédé selon au moins l'une quelconque des revendications 1 à 8, **caractérisé en ce que** l'on utilise comme véhicule automobile un véhicule pour le transport de marchandises ou de personnes.

10. Procédé selon au moins l'une quelconque des revendications précédentes, **caractérisé en ce que** l'on utilise comme véhicule automobile un véhicule poids lourd.
